# EUROPEAN PATENT SPECIFICATION

(11) **EP 4 205 548 B1**
(45) Date of publication and mention of the grant of the patent: **23.09.2026**
(21) Application number: 21878041.9
(22) Date of filing: 08.10.2021
(51) Int. Cl.: A01N 59/00, A01N 59/16, A01N 59/20, B22F 9/08, C22C 1/04, C22C 33/00, C22C 33/02, C22C 45/02, A01P 1/00, B22F 1/08

(54) **ALLOY, ALLOY POWDER, AND ALLOY COATED BODY HAVING ANTIMICROBIAL ACTIVITY**
LEGIERUNG, LEGIERUNGSPULVER UND LEGIERUNGSBESCHICHTETER KÖRPER MIT ANTIMIKROBIELLER WIRKUNG
ALLIAGE, POUDRE D'ALLIAGE, ET CORPS REVÊTU D'ALLIAGE AYANT UNE ACTIVITÉ ANTIMICROBIENNE

(30) Priority: 08.10.2020 KR 20200130107; 07.10.2021 KR 20210132934
(43) Date of publication of application: 05.07.2023
(73) Proprietor: Kolon Industries, Inc., Seoul 07793 (KR)
(72) Inventor: KIM, Choongnyun Paul, Seoul 07793 (KR)
(74) Representative: Vossius & Partner Patentanwälte Rechtsanwälte mbB
(86) International application number: PCT/KR2021/013844
(87) International publication number: WO 2022/075791

(56) References cited:
- EP-A1- 2 392 690
- CN-A- 110 230 015
- JP-A- 2010 156 035
- JP-A- H08 239 726
- JP-A- H1 018 095
- JP-A- H11 256 284
- KR-A- 20140 123 743
- KR-A- 20160 128 380
- MANNA ET AL: "Microstructural evolution of wear-resistant FeCrB and FeCrNiCoB coating alloys during high-energy mechanical attrition", WEAR, ELSEVIER SEQUOIA, LAUSANNE, CH, vol. 264, no. 11-12, 5 March 2008 (2008-03-05), pages 940 - 946, XP022511749, ISSN: 0043-1648, DOI: 10.1016/J.WEAR.2007.06.015
- BÜRKLE G. ET AL: "Determination of the Mechanical Properties of Nanocrystalline Fe-Cr-Based Thermal Spray Coatings", JOURNAL OF METASTABLE AND NANOCRYSTALLINE MATERIALS, vol. 13, 1 January 2002 (2002-01-01), pages 571 - 576, XP093200802, ISSN: 2297-6620, DOI: 10.4028/www.scientific.net/JMNM.13.571
- DUK-HYUN NAM ET AL: "Correlation of Microstructure, Hardness, and Fracture Toughness of Fe-Based Surface Composites Fabricated by High-Energy Electron Beam Irradiation with Fe-Based Metamorphic Alloy Powders and VC Powders", METALLURGICAL AND MATERIALS TRANSACTIONS A, SPRINGER-VERLAG, NEW YORK, vol. 40, no. 12, 22 September 2009 (2009-09-22), pages 2959 - 2970, XP019754937, ISSN: 1543-1940, DOI: 10.1007/S11661-009-0004-1

## Description

### [Technical Field]

The present disclosure relates to an alloy, an alloy powder, and an alloy coated body, and more particularly, to an alloy, an alloy powder, and an alloy coated body having an antimicrobial or sterilization effect.

### [Background Art]

In the recent global pandemic of COVID-19, interest in and demand for disinfection and sterilization are rapidly increasing around the world, and in addition to masks and hand sanitizers, antimicrobial films are provided on elevator buttons that various people come into contact with in their daily life. However, it is practically impossible to provide antimicrobial films in many fields requiring antimicrobial functions and the like, and the uncertainty of durability of antimicrobial activity and high price are obstacles to the commercialization of antimicrobial materials.

In general, metals that are known to have an antimicrobial effect include silver and copper. It is known that alloys containing copper or silver and these metals may kill human pathogens including germs such as *Listeria monocytogenes, Salmonella,* and methicillin-resistant *Staphylococcus aureus* (MRSA) .

The U.S. Environmental Protection Agency has declared that alloys containing 65% or more copper have intrinsic antimicrobial activity. However, despite such excellent antimicrobial properties, silver and copper have not been widely used as general living materials. In particular, although copper has a relatively low price as compared to silver, it is difficult to find examples of the application thereof.

The reason copper is difficult to commercialize is that, in addition to the issue of price, it is easily discolored by air, moisture, and humidity or salts in a portion thereof in contact with a human body, and a difference in color tone occurs in a portion that is not discolored.

In the case of an alloy material containing copper, a discoloration phenomenon may occur due to oxidation (elution) of an alloying element that imparts a color, and additionally, a metal oxide may be formed on a surface of the metal.

As a metal material for a living material, an alloy form in which metals are properly mixed is generally preferred to a pure metal. Existing known materials such as stainless steel, an aluminum alloy, and a titanium alloy, which have excellent discoloration and corrosion resistance, have been typically used as living materials.

Recently, materials having an effect of suppressing the growth of germs by using a surface coating on stainless steel having excellent corrosion resistance have been proposed. For example, an antimicrobial stainless steel sheet, coated steel, and the like obtained by coating a metal with silver (Ag) or copper (Cu) using a physical vapor deposition (PVD) method or a chemical vapor deposition (CVD) method have been proposed.

However, in the case of the PVD and CVD processes, economic feasibility is low because it takes a significantly long time to form a plating layer, and a shape of a part is limited due to a size of a vacuum chamber. In addition, in the case of these materials, since a thickness of an antimicrobial layer is significantly small, and mechanical properties are low, when a loss of the coating layer by an external force occurs, the antimicrobial effect in the loss area cannot be expected, and therefore, the antimicrobial properties are not permanently maintained.

In a case in which Ni is 35% or more in a Cu-Ni-based material among copper alloying materials, although discoloration resistance is improved, various colors cannot be realized, and a raw material price is too high, such that there is a limit to its use as a living material. In addition, Ni may cause an allergic reaction in a human body, and an elution problem of heavy metals may occur. Therefore, the development of an alloy that may replace the Cu-Ni alloy is required.

### (Related Art Document)

(Patent Document) Korean Patent No. 10-0914858 (published on 25 August, 2009) I. Manna, P.P. Chattopadhyay, F. Banhart, J. Croopnick, H.-J. Fecht, Microstructural evolution of wear-resistant FeCrB and FeCrNiCoB coating alloys during high-energy mechanical attrition, Wear, Volume 264, Issues 11-12, 2008, Pages 940-946.

BÜRKLE G. ET AL: "Determination of the Mechanical Properties of Nanocrystalline Fe-Cr-Based Thermal Spray Coatings",JOURNAL OF METASTABLE AND NANOCRYSTALLINE MATERIALS, vol. 13, 1 January 2002 (2002-01-01), pages 571-576

### [Disclosure]

### [Technical Problem]

An aspect of the present disclosure relates to an alloy, an alloy powder, and an alloy coated body having antimicrobial activity, and an object thereof is to provide an effective alloy, an alloy powder, and an alloy coated body having excellent antimicrobial activity while limiting the addition of expensive metals such as silver and copper.

Another aspect of the present disclosure is to provide an antimicrobial material that has a long-lasting antimicrobial effect and a long lifespan when applied to daily life or industrial products because it has excellent oxidation resistance and corrosion resistance and excellent wear resistance.

Another aspect of the present disclosure is to provide an alloy having excellent hardness and which may be used in various manners, such as in appliances, filters, hospitals, handles in public places, and household items, depending on a processing method, and an alloy powder and an alloy coated body obtained using the same.

Another aspect of the present disclosure is to provide an alloy coated body including an alloy coating layer that has a metal-based color and is less repulsive to a general user, and may be applied to various types of base materials.

### [Technical Solution]

The invention provides an alloy consisting of:
a first component composed of Fe and Ni;
a second component composed of one or more selected from the group consisting of Cr, Co, Mo, and Cu; and
a third component composed of one or more selected from the group consisting of Si, B, and P,
wherein, with respect to 100 parts by weight of the first component,
the second component may be contained in an amount of 90 to 110 parts by weight, and
the third component may be contained in an amount of 5 to 15, and a weight ratio of Fe to 100 parts by weight of the first component is 1.59 to 1.65 times the weight ratio of Ni to 100 parts by weight of the first component.

The second component may contain Cr, and may further contain one or more selected from Co, Mo, and Cu.

A weight ratio of Cr to 100 parts by weight of the first component may be 0.63 times to 1.39 times the weight ratio of Fe to 100 parts by weight of the first component.

The second component may be composed of Cr, Co, Mo, and Cu, and
the third component may be composed of Si and B.

According to another aspect of the present invention, an alloy powder may be obtained by melting the alloy, atomizing the alloy by spraying a fluid onto the melted alloy, and then cooling the atomized alloy with a refrigerant.

The alloy powder may include an amorphous phase and may have defects formed on a surface thereof.

The alloy powder has a reduction rate of *Escherichia coli* after 24 hours of 99.9% or more when measured by a test method of KSM 0146.

The alloy powder has a reduction rate of *Escherichia coli* after 1 hour of 80% or more when measured by a test method of KSM 0146.

According to another aspect of the present invention, an alloy coated body comprising:
a base material; and
an alloy coating layer provided on the base material,
wherein the alloy coating layer contains an alloy consists of:
a first component composed of Fe and Ni;
a second component composed of one or more selected from the group consisting of Cr, Co, Mo, and Cu; and
a third component composed of one or more selected from the group consisting of Si, B, and P,
with respect to 100 parts by weight of the first component,
the second component may be contained in an amount of 90 to 110 parts by weight, and
the third component may be contained in an amount of 5 to 15, and
a weight ratio of Fe in the first component to 100 parts by weight of the first component is 1.59 to 1.65 times the weight ratio of Ni to 100 parts by weight of the first component.

A thickness of the alloy coating layer may be 10 µm to 500 µm.

A porosity of the alloy coating layer may be 5.0% or less.

The alloy coating layer may have a reduction rate of *Escherichia coli* after 24 hours of 99.9% or more when measured by a test method of JIS Z 2801.

### [Advantageous Effects]

As set forth above, the alloy, the alloy powder, and the alloy coated body according to the invention have excellent antimicrobial activity against *Escherichia coli, Staphylococcus aureus,* and *Klebsiella pneumonia* and have excellent economic feasibility, and thus may be applied to a wide range of fields such as daily life.

When the alloy according to an aspect of the present disclosure is manufactured into an alloy powder, the alloy has a significantly excellent antimicrobial effect against germs for a short time and has a higher sterilization and antimicrobial effect than a copper metal, such that it is possible to provide a substantially further improved antimicrobial effect than the copper metal.

The alloy coating layer according to an aspect of the present disclosure may be produced using the alloy powder, even after the alloy powder is produced as a coating layer, the antimicrobial activity against *Escherichia coli, Staphylococcus aureus,* and *Klebsiella pneumonia* is not reduced, and the alloy coating layer may have antimicrobial activity equal to or superior to that of the copper metal.

Since the alloy powder and the alloy coating layer according to an aspect of the present disclosure include an amorphous phase due to an amorphous forming ability of the alloy, corrosion resistance and oxidation resistance are excellent. Therefore, problems such as a reduction in an antimicrobial effect, discoloration, corrosion do not occur over time, such that the alloy powder and the alloy coating layer have economic advantages of high efficiency and a long lifespan, and excellent physical properties such as a hardness of the powder and coating layer, and thus may be used in various manners depending on the use.

The alloy according to an aspect of the present disclosure has significantly high surface energy and surface activity because the additive elements are significantly uniformly and evenly distributed and a short range ordered structure and microstructural defects are included. Therefore, it is difficult for germs and bacteria to attach and proliferate on the surface of the amorphous alloy, such that the alloy may have excellent antimicrobial activity.

The alloy powder and the alloy coating layer according to an aspect of the present disclosure have high metal ion activity on the surface by an oligodynamic action due to the amorphous structure of the alloy, and may have excellent antimicrobial activity because copper, nickel, and cobalt may cause the oligodynamic action on the surface due to the compositional characteristics of the composition for an alloy.

The alloy powder or the alloy coated body manufactured using the alloy according to an aspect of the present disclosure is less affected by moisture or humidity, such that the alloy powder or the alloy coated body may be used even in a high-humidity environment where germs or fungi are likely to proliferate. Therefore, an excellent antimicrobial effect may be obtained, and the alloy powder or the alloy coated body may be applied to toilets, sewers, and the like where an antimicrobial material or processed product according to the related art has been difficult to apply, and may be used in medical devices, handles in buildings, interior parts of ambulances, stretchers, and the like where a risk of infection needs to be reduced and excellent wear resistance is required. In addition, it has excellent resistance to external contamination and antifouling properties, and its utilization is high.

The alloy powder according to an aspect of the present disclosure has an excellent amorphous forming ability even when the alloy powder forms a spray coating layer using a spray coating method or the like, such that a coating layer including an amorphous phase may be formed, and a hardness, corrosion resistance, and oxidation resistance of the formed alloy coating layer may be further improved.

The composition for an alloy according to an aspect of the present disclosure includes an amorphous phase while containing copper known to have antimicrobial activity in a low weight of 4 wt% or less, such that excellent antimicrobial activity and economic feasibility may be secured.

### [Best Mode for Invention]

The present disclosure relates to an alloy, an alloy powder, and an alloy coated body. Hereinafter, preferred exemplary embodiments in the present disclosure will be described. The exemplary embodiments in the present disclosure may be modified in various forms, and the scope of the present disclosure should not be interpreted to be limited to the exemplary embodiments set forth below. These exemplary embodiments are provided in order to describe the present disclosure in more detail to those skilled in the art to which the present disclosure pertains.

In a case in which the term "antimicrobial" is used in the present specification, it may be interpreted in a broad sense including all of suppressing, inhibiting, sterilizing, or pasteurizing the growth of required microorganisms, and here, sterilization may mean killing at least some microorganisms in a target material, and pasteurization may mean removing or killing all microorganisms from the inside, surface, or space of the target material.

In addition, the antimicrobial activity may mean a property that resists microorganisms such as germs or fungi, and more specifically, may mean a property of suppressing the growth or proliferation of germs. In a case in which the expression "having antimicrobial activity" is used, it may be understood to mean that the corresponding material or sample has an effect or activity such as antimicrobial properties or fungus resistance measured by the KS test method or international standard test method against specific germs and bacteria.

In the present specification, part(s) by weight of an element contained in an alloy composition may be understood to include a target composition calculated from a raw alloy during manufacture of the alloy and an actual element composition of the manufactured alloy, and may preferably be calculated from a component analysis result of the manufactured alloy.

Hereinafter, an alloy of the present disclosure will be described in more detail.

The alloy of the present disclosure contains a first component, a second component, and a third component.

The first component is a component that may affect physical properties, productivity, and economic feasibility of the alloy. The first component may be contained in a weight similar to or higher than that of the second component or the third component based on the total weight of the alloy. The second component may be contained in a weight higher than that of the third component based on the total weight of the alloy. Preferably, the second component may be contained in an amount of 90 to 110 parts by weight with respect to 100 parts by weight of the first component, and the third component may be contained in an amount of 5 to 15 parts by weight with respect to 100 parts by weight of the first component.

According to the invention, the first component contains both Fe and Ni.

According to the invention, a weight ratio (Fe/Ni) of Fe to Ni contained in the first component with respect to 100 parts by weight of the first component is 1.59 to 1.65.

In a case in which the ratio of Fe to Ni is out of the corresponding range or a case in which Fe is not contained and only Ni is contained as the first component, it is not preferable in terms of economic feasibility, and when in contact with a human body, human body characteristics such as an allergic reaction to Ni may be caused. Therefore, Fe is contained in the first component. In addition, in a case in which a content of Ni does not fall within a certain range, high-temperature stability is reduced, which may cause oxidation of a powder, depletion of alloying elements in a coating layer, and peeling of the coating layer during production of the coating layer. Therefore, Ni is contained in the first component in the content range described above.

The second component may contribute to improving an amorphous forming ability of the alloy, or improving physical and chemical properties such as a hardness, corrosion resistance, and oxidation resistance of the alloy. The second component is one or more selected from chromium (Cr), cobalt (Co), molybdenum (Mo), and copper (Cu). The second component may be one or more selected from Cr, Co, Mo, and Cu, and may contain all of Cr, Co, Mo, and Cu.

The second component is contained in an amount of 90 to 110 parts by weight with respect to 100 parts by weight of the first component. The second component may preferably be contained in an amount of 95 to 105 parts by weight, and may more preferably be contained in an amount of 99 to 102 parts by weight.

In order to secure an antimicrobial effect and corrosion resistance, the second component is added in the content range described above. In a case in which the content of the second component exceeds the corresponding range, not only it is not preferable in terms of economic feasibility, but also damage by an external force may be caused due to increased brittleness of the coating layer, and thus, a desired level of antimicrobial properties may not be secured.

The second component may essentially contain Cr, and a content of Cr contained in the second component may be higher than the total content of Co, Mo, and Cu. For example, in a case in which Cr is contained as the second component and one or more of Mo, Co, and Cu are additionally contained, a ratio (A) of the sum of the weight ratio of Cr and the weight ratio of the components other than Cr in the second component may be calculated as a/ (b + c + d), and the value may be 1.5 to 2.5, and preferably 1.7 to 2.2, in which a, b, c, and d are the weight ratios of Cr, Co, Mo, and Cu, respectively, with respect to 100 parts by weight of the first component. In order to secure the antimicrobial properties, it is preferable to limit a lower limit of the content ratio (A) to the level described above. On the other hand, in a case in which the content ratio (A) exceeds the level described above, it is not preferable in terms of economic feasibility, and surface discoloration may occur due to reduced corrosion resistance.

When the content of Cr contained in the second component is compared with the content of Fe contained in the first component, the weight ratio of Cr with respect to 100 parts by weight of the first component may be 0.63 times to 1.39 times the weight ratio of Fe with respect to 100 parts by weight of the first component. Preferably, the weight ratio of Cr with respect to 100 parts by weight of the first component may satisfy a range of 0.99 to 1.20 times the weight ratio of Fe with respect to 100 parts by weight of the first component.

In a case in which the content ratio of Cr to Fe is out of the corresponding range, the amorphous forming ability is reduced and a ratio of an amorphous phase contained in the alloy is reduced. Therefore, the antimicrobial effect may be reduced or the corrosion resistance may be reduced.

It is preferable that a content of Cu contained in the second component is less than the content of each of Co, Mo, and Cr. For example, in a case in which Cu is contained as the second component and one or more of Mo, Co, and Cr are additionally contained, a ratio (B) of the sum of the weight ratio of Cu and the weight ratio of the components other than Cu in the second component may be calculated as d/ (a + b + c), and the value may be 0.04 to 0.10, and preferably 0.05 to 0.07, in which a, b, c, and d are the weight ratios of Cr, Co, Mo, and Cu, respectively, with respect to 100 parts by weight of the first component.

In a case in which Cu is not contained in the second component or the content ratio of the other components with respect to the content of Cu is out of the corresponding range, the antimicrobial properties may be reduced, the corrosion resistance may be reduced, and thermal and electrical conductivity may be reduced.

Cu may be contained in an amount of 0 to 9.0 parts by weight with respect to 100 parts by weight of the first component. Cu may preferably be contained in an amount of 0.1 to 8.0 parts by weight, and may more preferably be contained in an amount of 4.5 to 7.5 parts by weight.

In a case in which the content of Cu does not fall in the corresponding range, the antimicrobial properties may be reduced, and in a case in which the content of Cu exceeds the corresponding range, the economic feasibility may be reduced due to an increase in production costs.

Co may be contained in an amount of 0 to 25 parts by weight with respect to 100 parts by weight of the first component. Co may preferably be contained in an amount of 19 to 25 parts by weight, and may more preferably be contained in an amount of 20 to 24 parts by weight.

In a case in which the content of Co exceeds the corresponding range, the economic feasibility may be reduced due to an increase in production costs. On the other hand, in a case in which the content of Co is lower than the corresponding range, the antimicrobial properties may be reduced, an oxide fraction in the coating layer may be increased due to reduction of high-temperature stability, and peeling of the coating layer may be caused by an external force.

The third component may be contained in a relatively small ratio, and may improve the amorphous forming ability of the alloy and may impart special functions such as antimicrobial activity.

The third component is one or more selected from the group consisting of silicon (Si), boron (B), and phosphorus (P), and is contained in an amount of 5 to 15 parts by weight with respect to 100 parts by weight of the first component. The third component may preferably be contained in an amount of 7 to 13 parts by weight, and may more preferably be contained in an amount of 9 to 12 parts by weight.

In a case in which the content of the third component is less than the corresponding range, the amorphous forming ability of the alloy is reduced, and thus the corrosion resistance and hardness may be reduced. In a case in which the content of the third component exceeds the corresponding range, the content of the first component or the second component is relatively reduced, which may cause not only a reduction in strength of the alloy, but also a reduction in antimicrobial activity.

In a case in which both Si and B are contained as the third component, a weight ratio of B to Si in the third component (the weight ratio of B with respect to 100 parts by weight of the first component/the weight ratio of Si with respect to 100 parts by weight of the first component) may be within a range of 1.5 to 10. Preferably, the weight ratio of B to Si may be within a range of 2.5 to 9.

In a case in which the content ratio of B to Si is out of the corresponding range, the corrosion resistance, the hardness, and the strength may be reduced, and the antimicrobial activity may be reduced.

An alloy powder according to an aspect of the present disclosure is provided using the alloy described above. The alloy powder according to an aspect of the present disclosure may have an alloy composition corresponding to that of the alloy described above, and may include an amorphous phase. The alloy powder may be manufactured into a powder using a well known method, for example, an atomizing (or atomization) method.

The atomizing method is a method in which an alloy in a molten state is allowed to flow down by pressure or gravity, gas or a fluid such as water is sprayed onto the flowing molten alloy to atomize the molten alloy in a form of fine drops or droplets, and then the split droplets are quenched using an refrigerant such as an inert gas or water to manufacture an alloy powder. Since the atomizing method is a well-known technique for manufacturing a metal powder, a detailed description thereof will be omitted.

In order to manufacture an amorphous powder in the atomizing method, the split droplets are required to be rapidly cooled because it is advantageous for the molten alloy to become amorphous by being solidified without a time for crystallization.

Accordingly, in order to manufacture an alloy powder having a higher ratio of an amorphous phase, it is more advantageous to have a special cooling facility capable of increasing a cooling rate.

However, the alloy according to an aspect of the present disclosure has an excellent amorphous forming ability, such that even when a common atomizing method is used, an alloy powder having a high ratio of an amorphous phase may be manufactured.

In the case of the common atomizing method without a special cooling facility, an amorphous phase powder may be manufactured using the alloy according to an aspect of the present disclosure even under a cooling rate of 10² to 10³ or 10¹ to 10⁴ (degree/sec) . In this case, 10^{1 to 2} (degree/sec) is a cooling rate substantially close to air cooling, and is a cooling rate when an alloy solution is ejected into the air.

Meanwhile, an alloy powder or an alloy coating layer including an amorphous phase may have microstructural defects having additive elements that are significantly uniformly distributed while having a short range ordered structure.

A defect refers to an irregular atomic arrangement or bonding structure that appears in the microscopic aspect, such as an atomic structure of a material. The defect may be understood as a concept including a point defect, which is a zero-dimensional defect, line defects or dislocations, which are lattice distortions concentrated around imaginary lines, as one-dimensional defects, and plane defects that occur two-dimensionally and include external surfaces, grain boundaries, stacking defects, and slip bands.

Due to these microscopic defects of the alloy powder or the alloy coating layer including an amorphous phase, the amorphous alloy powder and the amorphous alloy coating layer may have significantly high surface energy and activity compared to a crystalline alloy.

In this case, the uniform distribution of the additive elements and the high surface energy and activity make it difficult for germs, bacteria, fungi, and the like to attach or proliferate on a surface of the amorphous alloy powder or the amorphous alloy coating layer, and may obtain an excellent antimicrobial effect compared to a crystalline metal material.

The antimicrobial activity in the alloy, the alloy powder, and the alloy coating layer according to an aspect of the present disclosure is also interpreted as having an excellent antimicrobial activity due to a combination of these factors. Although a specific mechanism is not revealed, it may be inferred through Examples and Experimental Examples described below that the alloy powder and the alloy coated body having a specific alloy composition and including an amorphous phase exhibit advantageous antimicrobial activity.

Regarding the antimicrobial activity of the alloy powder and the alloy coating layer of the present disclosure, an oligodynamic action may be regarded as another mechanism of the antimicrobial activity.

The oligodynamic action is a phenomenon in which a trace amount of metal ions inhibits the growth of organisms or causes the organisms to die, and is known as a mechanism to explain the antimicrobial action of phosphorus copper, one of the representative antimicrobial metals.

Specifically, the oligodynamic action is also observed in metals such as silver, gold, platinum, mercury, nickel, lead, and cobalt, in addition to copper. The antimicrobial activity of the alloy may be explained by a mechanism in which microorganisms such as bacteria recognize the metal ions as essential nutrients and absorb them into cells, but the absorbed metal ions (including copper ions) reduce a survival time of bacteria and kill the bacteria by accompanying actions such as puncturing cell membranes or inhibiting metabolism, and attracting active oxygen, and a mechanism in which metal ions destroy germs or viral proteins and decompose and kill a genetic material.

According to such an oligodynamic action, the alloy, the amorphous alloy powder, and the amorphous alloy coating layer according to an aspect of the present disclosure have the corresponding composition ratio and including the amorphous phase, such that the effect of the oligodynamic action on the surface may be exhibited better than other alloys or a pure copper metal. Therefore, the alloy, the amorphous alloy powder, and the amorphous alloy coating layer may have an excellent antimicrobial effect.

For example, since components other than copper, nickel, and cobalt are contained in the surface of the alloy containing copper, nickel, and cobalt, a binding force, surface energy, an ionization rate, and the like of the metal atoms are different from those of a crystalline metal or a crystalline alloy, such that a release rate in the amorphous alloy is faster, and since various types of metal ions are released and types and absorption rates of the metal ions absorbed by bacteria, and effects in the bacteria may be different from each other, it is expected that the alloy may have excellent antimicrobial activity by targeting a wide range of microorganisms.

In particular, in the case of the amorphous alloy, the metal atoms do not form a certain metal bond in a crystalline structure, and the additive elements are significantly uniformly distributed, such that it is easy to release fine metal atoms or metal ions in atomic units capable of taking an oligodynamic action, the amount, rate, and type of metal ions released from the surface vary depending on the composition of the alloy, and at the same time, a significant quantitative effect can be exhibited due to a complex release of several types of metal ions.

Meanwhile, a diameter of the alloy powder affects a surface area and is related to the antimicrobial activity of the alloy powder, and thus, a particle size of the alloy powder may be controlled to obtain appropriate antimicrobial activity.

A diameter of an alloy powder to be manufactured is not limited, and may be, as a non-limiting example, 1 to 150 µm, and more preferably 1 to 54 µm.

In a case in which a particle size of the alloy powder is larger than the corresponding range, the appropriate surface area may be decreased and the efficiency of antimicrobial activity may be reduced. A powder having a particle size smaller than the corresponding range may be difficult to manufacture and expensive, and may not exhibit a sufficient antimicrobial effect.

An alloy powder may be manufactured in a shape close to a sphere. A hardness (Vickers hardness) of the alloy powder is not limited, and may vary depending on the purpose and the field of application of the powder. Without limitation, the alloy powder may have a hardness of 550 to 1,500 Hv, and preferably may have a hardness of 800 to 1,200 Hv.

In a case in which the hardness of the alloy powder is out of the corresponding range, the alloy powder may not have wear resistance or may not be applied to an antimicrobial product for wear resistance.

The alloy powder according to an aspect of the present disclosure may have excellent antimicrobial activity. The type and characteristics of bacteria to which the antimicrobial effect is exerted are not limited, and the antimicrobial effect may mean excellent antimicrobial activity against strains such as *Escherichia coli, Staphylococcus aureus,* and *Klebsiella pneumonia.*

The antimicrobial activity may be obtained with different test methods and results depending on the use, shape, material, or the like of a sample, and in the case of the alloy powder, the antimicrobial activity may be tested, for example, by a method such as KSM 0146.

In general, if there is an effect of reducing the number of bacteria by 99.9% or more based on culture for 24 hours, it is often recognized that there is an antimicrobial effect. In the case of the alloy powder according to an aspect of the present disclosure, the effect of reducing the number of bacteria after 24 hours may be similar to or higher than that in a case of a copper metal sample known to have an excellent antimicrobial effect. A reduction rate of the number of bacteria after 1 hour may be 80% or more.

The alloy coated body according to an aspect of the present disclosure may be a coated body obtained by forming an alloy coating layer formed using the alloy powder described above on a base material.

The base material on which the alloy coated body is formed is not limited, and a material, component, size, and use thereof are not limited.

A method of forming the alloy coating layer and a coating method according to the present exemplary embodiment are not limited, and it is preferable to use a commonly available coating method including a spray coating method capable of producing an alloy coating layer using the alloy powder described above, for example, a high velocity oxygen fuel spray (HVOF) method, a plasma spray method, a twin wire arc spray (TWAS) method, a cold spray method, a vacuum plasma spray method, a low pressure plasma spray method, or a cladding method, for example, a laser cladding method.

A raw material used for the coating is not limited as long as it is a molded form of the alloy composition described above, and an alloy powder, an alloy wire, a fluxed cored wire, and the like may be used.

Meanwhile, a thickness of the alloy coating layer formed on the base material is not limited, and may vary depending on a type of the base material on which the coating layer is formed, a thickness, a purpose of use, and a use environment of the base material, and the like. The thickness may preferably be 10 µm to 500 µm and more preferably 50 to 300 µm.

The antimicrobial activity of the alloy coating layer may be measured by various test methods depending on the shape and conditions of the sample, and the antimicrobial activity of the alloy coating layer may be evaluated, for example, by a method such as JIS Z 2801 or FC-TM-20.

In general, if there is an effect of reducing the number of bacteria by 99.9% or more based on culture for 24 hours, it is often recognized that the alloy coating layer has an antimicrobial effect. In the case of the alloy coating layer according to an aspect of the present disclosure, the effect of reducing the number of bacteria after 24 hours may be similar to or higher than that in a case of a copper metal sample known to have an excellent antimicrobial effect. A reduction rate of the number of bacteria after 1 hour may be 80% or more.

The alloy coating layer according to an aspect of the present disclosure may be an amorphous alloy coating layer including an amorphous phase. Since the alloy coating layer includes an amorphous phase, the alloy coating layer may have excellent physical properties of an amorphous alloy.

For example, a Vickers hardness of the alloy coating layer may be 550 to 1,500 Hv and preferably 800 to 1,200 Hv.

In a case in which the hardness of the alloy coating layer is lower than the corresponding range, wear resistance may be reduced, and surface damage, dents or scratches, and the like may occur, and in a case in which the hardness of the alloy coating layer is higher than the corresponding range, breakage, cracks, or surface damage due to brittleness may occur.

In addition, since the alloy coating layer according to an aspect of the present disclosure has excellent corrosion resistance, wear resistance, and oxidation resistance, when the alloy coating layer is used, peeling or corrosion of the coating layer is less likely to occur, such that not only a lifespan of the coating layer may be improved, but also the antimicrobial activity of the alloy coating layer may be maintained for a long time without reduction.

In addition, a porosity of the alloy coating layer according to an aspect of the present disclosure may vary depending on a particle size of the powder used for coating, a coating method, and coating conditions . It is more preferable as the porosity of the alloy coating layer is lower, and the porosity of the alloy coating layer is specifically within 5.0%, and preferably within 1.0%.

In a case in which the porosity exceeds the corresponding range, a reduction in hardness or wear resistance may occur due to a decrease in the quality of the alloy coating layer, and problems such as a reduction in corrosion resistance may occur due to easy permeation of corrosive substances. In addition, attachment or proliferation of bacteria may be likely to occur.

The application fields of the alloy powder and the alloy coated body according to the present disclosure are not limited, and the alloy powder and the alloy coated body may be used in various fields such as medical, sanitary, and household items, and appliances where antimicrobial activity may be utilized.

### [Mode for Invention]

Hereinafter, the present disclosure will be described in detail with reference to Examples. It should be noted that the following Examples are only for the understanding of the present disclosure and are not intended to specify the scope of the present disclosure. The scope of the present disclosure may be determined by the matters described in the claims and matters reasonably inferred therefrom.

### (Examples)

### Examples 1 to 7 - Manufacture of Alloy Powder

Alloys prepared with compositions having the components and parts by weight shown in Table 1 were melted and atomized using an atomizer under an inert gas atmosphere, and then the atomized alloys were cooled, thereby manufacturing alloy powder particles including an amorphous phase. An average particle size of the manufactured powder particles was measured using a laser particle size analyzer. The results thereof are listed together in Table 1.

**[Table 1]**

| Composition | First component (parts by weight) | | Second component (parts by weight) | | | | Third component (parts by weight) | | Average particle size (D50) (µm) |
|---|---|---|---|---|---|---|---|---|---|
| | Fe | Ni | Cr | Co | Mo | Cu | B | Si | |
| Example 1 | 61.7 | 38.3 | 65.96 | 21.28 | 8.51 | 5.32 | 8.51 | 3.19 | 30 |
| Example 2 | 61.39 | 38.61 | 72.81 | 21 | 4.22 | 3.93 | 10.8 | 1.2 | 35 |
| Example 3 | 62.26 | 37.74 | 59.4 | 21.55 | 9.05 | 9.0 | 6.43 | 2.57 | 30 |
| Example 4 | 60.0 | 40.0 | 72.18 | 20.8 | 7.01 | 5.0 | 7.8 | 5.2 | 40 |
| Example 5 | 64.29 | 35.71 | 59.84 | 20.49 | 8.49 | 6.22 | 6.36 | 0.64 | 30 |
| Example 6 | 56.53 | 43.47 | 78.5 | 27.16 | 0 | 4.24 | 13.5 | 1.5 | 20 |
| Example 7 | 66.66 | 33.34 | 54.2 | 0 | 27.82 | 7.98 | 3.58 | 1.42 | 25 |

Examples 1-3 are according to the invention and examples 4 to 7 are comparative examples.

### Examples 8 to 14 - Manufacture of Alloy Coated Body

The alloy powder particles manufactured in Examples 1 to 7 were used, Oerlikon Metco Diamond Jet series HVOF gas fuel spray system was used, oxygen and propane gas were used as fuel, an injection distance was set to 30 cm, and then alloy coated bodies were formed on base materials by a high velocity oxygen fuel spray (HVOF) method. The equipment and conditions used at this time are described in detail below.

### - DJ Gun HVOF -

[Conditions] Gun type: Hybrid, Air cap: 2701, LPG Flow 160 SCFH, LPG Pressure 90 PSI, Oxygen flow 550 SCFH, Oxygen Pressure 150 PSI, Air flow 900 SCFH, Air Pressure 100 PSI, Nitrogen flow 28 SCFH, Nitrogen Pressure 150 PSI, Gun speed: 100 m/min, Gun pitch: 3.0 mm, Feeder rate 45 g/min, Stand-off distance: 250 mm

### (Comparative Examples)

### Comparative Examples 1 to 6 - Manufacture of Alloy Powder

Alloys satisfying the component compositions shown in Table 2 were manufactured, and then crystalline metal powder particles and alloy powder particles including an amorphous phase were manufactured in the same manner as in Examples 1 to 7. A particle size of the manufactured powder was measured using a laser particle size analyzer. The results thereof are listed together in Table 2. An amorphous phase fraction of each powder was measured using electron backscatter diffraction (EBSD). The results thereof are listed together in Table 2. The mark "o" in the presence or absence of the amorphous phase means that the fraction of the amorphous phase is 10% by volume or more, and the mark "X" in the presence or absence of the amorphous phase means that the fraction of the amorphous phase is less than 10% by volume.

**[Table 2]**

| Composition | First component (parts by weight) | | Second component (parts by weight) | | | | Third component (parts by | | | Particle size (µm) | Presence or absence of amorphous phase |
|---|---|---|---|---|---|---|---|---|---|---|---|
| | Fe | Ni | Cr | Co | Mo | Cu | B | Si | C | | |
| Comparative Example 1 | 0 | 0 | 0 | 0 | 0 | 100 | 0 | 0 | 0 | 25 | X |
| Comparative Example 2 | 100 | 0 | 29.2 | 0 | 50.2 | 0 | 2.3 | 0 | 7.0 | 35 | ○ |
| Comparative Example 3 | 67.74 | 32.26 | 83.92 | 10.00 | 1.91 | 19.17 | 0 | 4 | 0 | 30 | ○ |
| Comparative Example 4 | 52.38 | 47.62 | 40 | 20.60 | 17.07 | 2.33 | 0 | 16 | 0 | 35 | ○ |
| Comparative Example 5 | 100 | 0 | 91.67 | 0 | 0 | 0 | 13.64 | 4.17 | 0 | 35 | ○ |
| Comparative Example 6 | 100 | 0 | 72.86 | 21.00 | 4.22 | 3.92 | 0 | 0 | 0 | 35 | X |

### Comparative Examples 7 to 10 - Manufacture of Alloy Coated Body

The alloy powder particles of Comparative Examples 1 to 4 were coated on base materials under the same equipment and conditions as in Examples 8 to 14 to obtain alloy coated bodies provided with alloy coating layers.

### (Experimental Examples)

### Experimental Example 1 - Composition Analysis of Manufactured Alloy Powder

As a result of analyzing the alloy powder particles of Examples 1 to 7 using an inductively coupled plasma spectrometer (ICP), it could be confirmed that the alloy component content of the alloy used in the manufacture of the alloy powder was the same as the alloy component content of the alloy powder manufactured using the same, and even when there was a slight difference, it was within the manufacturing error range.

### Experimental Example 2 - Antimicrobial Activity Experiment of Alloy Powder

In order to evaluate the antimicrobial activity of each of the alloy powder particles of Examples 1 to 7 and Comparative Examples 1 to 6, a shake flask method was performed based on the test method presented in Korean industrial standard KSM 0146 (2003). Cultures of *Escherichia coli, Staphylococcus aureus,* and *Klebsiella pneumonia* were used to prepare a bacterial culture medium at a final concentration of 1 to 5 × 105 CFU/ml, and then a sample was added thereto at a rate of 0.09 g/ml.

1 g of each of the alloy powder particles of Examples 1 to 7 and Comparative Examples 1 to 6 was added, the flask was subjected to shaking culture at 37 ± 1°C and 120 rpm for 24 hours, and then the number of viable cells before and after culture in each group was measured.

As for the antimicrobial activity, a bacterial reduction rate expressed as a percentage of the number of bacteria observed after 24 hours compared to the initial number of bacteria was calculated. The results of Examples 1 to 5 and Comparative Examples 1 to 6 are shown in Table 3.

**[Table 3]**

| Classification | *Escherichia coli* | | | *Staphylococcus aureus* | | | *Klebsiella pneumonia* | | |
|---|---|---|---|---|---|---|---|---|---|
| | Initial stage | Result | Reduction rate (%) | Initial stage | Result | Reduction rate (%) | Initial stage | Result | Reduction rate (%) |
| Example 1 | 2.1X10⁵ | <30 | 99.9 | 2.1X10⁵ | <30 | 99.9 | 2.1X10⁵ | <30 | 99.9 |
| Example 2 | 2.2X10⁵ | <30 | 99.9 | 2.1X10⁵ | <30 | 99.9 | 2.2X10⁵ | <30 | 99.9 |
| Example 3 | 2.1X10⁵ | <30 | 99.9 | 2.1X10⁵ | <30 | 99.9 | 2.3X10⁵ | <30 | 99.9 |
| Example 4 | 2.2X10⁵ | <10² | 99.9 | 2.3X10⁵ | <10² | 99.9 | 2.2X10⁵ | <10² | 99.9 |
| Example 5 | 2.2X10⁵ | <10² | 99.9 | 2.3X10⁵ | <10² | 99.9 | 2.1X10⁵ | <10² | 99.9 |
| Example 6 | 2.2X10⁵ | 1.5X10³ | 99.3 | 2.2X10⁵ | 2.1X10³ | 99.0 | 2.1X10⁵ | 1.2X10³ | 99.4 |
| Example 7 | 2.1X10⁵ | 1.7X10³ | 99.2 | 2.2X10⁵ | 1.7X10³ | 99.2 | 2.1X10⁵ | 1.4x10³ | 99.3 |
| Comparative Example 1 | 2.1X10⁵ | <30 | 99.9 | 2.1X10⁵ | <30 | 99.9 | 2.1X10⁵ | <30 | 99.9 |
| Comparative Example 2 | 2.4X10⁵ | 3.7X10³ | 97.2 | 2.1X10⁵ | <30 | 99.9 | 2.1X10⁵ | 1.9X10⁴ | 85.4 |
| Comparative Example 3 | 2.2X10⁵ | 8.7X10³ | 60.5 | 2.1X10⁵ | 3.9X10⁴ | 81.4 | 2.1X10⁵ | 1.3X10⁵ | 38.1 |
| Comparative Example 4 | 2.2X10⁵ | 5.2X10³ | 76.4 | 2.1X10⁵ | 1.1X10⁴ | 94.8 | 2.1X10⁵ | 7.9X10⁴ | 62.4 |
| Comparative Example 5 | 2.4x10⁵ | 3.5X10³ | 73.1 | 2.1X10⁵ | 3.9X10⁴ | 97.0 | 2.1X10⁵ | 1.8X10⁵ | 14.2 |
| Comparative Example 6 | 2.4x10⁵ | 6.2X10³ | 74.2 | 2.1X10⁵ | 8.1X10⁴ | 61.4 | 2.1X10⁵ | 9.5X10⁴ | 54.8 |

In Example 1 and Comparative Example 1, it may be appreciated that the antimicrobial activity is excellent because a reduction rate of 99.9% or more is shown for all of *Escherichia coli, Staphylococcus aureus,* and *Klebsiella pneumonia,* and in Comparative Examples 2 to 6, it may be appreciated that the antimicrobial activity against *Escherichia coli, Staphylococcus aureus,* and *Klebsiella pneumonia* is relatively low.

### Experimental Example 3 - Antimicrobial Activity Experiment of Alloy Coating Layer

In order to evaluate the antimicrobial activity of the alloy coated body of Example 8, the antimicrobial activity experiment was performed by a film adhesion method based on the test method presented in JIS Z 2801.

Under test conditions of a temperature of 37 to 38°C and a time of 23 to 24 hr, a coated body having a sample size of 50 mm in width and length was used, *Escherichia coli, Staphylococcus aureus,* and *Klebsiella pneumonia* were cultured in each medium, the initial number of bacteria was measured, the test bacterial solution was subjected to stationary culture under 35 + ± 1°C and a relative humidity of 90% for 24 hours in a state in which the sample piece was in contact with the medium, and then the number of bacteria was measured. The reduction rates thereof are shown in Table 4.

**[Table 4]**

| Classification | | Example 8 |
|---|---|---|
| *Escherichia coli* | Initial stage | 1.4X10⁴ |
| | Result | <0.63 |
| | Reduction rate (%) | 99.9% |
| *Staphylococcus aureus* | Initial stage | 1.4X10⁴ |
| | Result | <0.63 |
| | Reduction rate (%) | 99.9% |
| *Klebsiella pneumonia* | Initial stage | 1.7X10⁴ |
| | Result | <0.63 |
| | Reduction rate (%) | 99.9% |

Even in the alloy coated body of Example 8, it could be appreciated that the antimicrobial activity was excellent because a reduction rate was 99.9% or more for all of *Escherichia coli, Staphylococcus aureus,* and *Klebsiella pneumonia,* and it could be confirmed that when compared with the result of the antimicrobial experiment of Example 1, the coated body obtained by spray coating the powder had the antimicrobial activity similar to that of the powder.

### Experimental Example 4 - 1 Hour Antimicrobial Effect Experiment of Alloy Powder

An experiment was performed in the same manner as in Experimental Example 2, except that the culture time of shaking the powder particles of Example 1 and Comparative Example 1 was set to 1 hour instead of 24 hours. The results thereof are shown in Table 5.

**[Table 5]**

| Classification | | Example 1 | Comparative Example 1 |
|---|---|---|---|
| *Escherichia coli* | Initial stage | 2.5X10⁵ | 2.4X10⁵ |
| | Result | 3.1X10⁴ | 1.5X10⁵ |
| | Reduction rate (%) | 87.6% | 37.5% |
| *Staphylococcus aureus* | Initial stage | 2.1X10⁵ | 2.1X10⁵ |
| | Result | 1.9X10⁵ | 1.7X10⁵ |
| | Reduction rate (%) | 9.5% | 19.0% |
| *Klebsiella pneumonia* | Initial stage | 2.1X10⁵ | 2.5X10⁵ |
| | Result | 1.9X10⁵ | 1.0X10⁵ |
| | Reduction rate (%) | 9.5% | 60.0% |

As a result, it was confirmed that the powder of Example 1 had excellent antimicrobial activity more than 2 times that of the copper powder because the reduction rate of *Escherichia coli* for 1 hour of the powder of Example 1 was 2 times to 3 times that of the copper powder of Comparative Example 1.

Experimental Example 5 - Evaluation of Antimicrobial Durability According to Repeated Inoculation of Amorphous Alloy Coated Specimen and Evaluation of Antimicrobial Properties under Severe Conditions

### [Evaluation of Antimicrobial Durability According to Repeated Inoculation]

After preparing stainless steel (STS) specimens having a size of 2 cm * 2 cm, an amorphous alloy coating layer was formed on surfaces of some of the specimens using the alloy powder of Example 1. At this time, the amorphous alloy coating layer was produced by applying the same method as in Examples 8 to 14.

The surfaces of the prepared uncoated specimens and amorphous alloy coated specimens were washed with 70% ethanol and then dried in a clean bench for about 15 hours. Mixed bacteria obtained by mixing *Escherichia coli, Staphylococcus aureus,* and *Klebsiella pneumonia* were repeatedly inoculated 5 times in an amount of 10⁵ cfu/ml to the dried specimens using a 1/500 NB medium. After the inoculation, the mixed bacteria were covered with a UV sterilized cover glass (18 mm * 18 mm) and cultured in a constant temperature and humidity chamber maintained at 36°C and 90% RH. At 2 hours after each round of inoculation, bacteria were recovered by vortexing each specimen in 10 ml of a letheen medium. After diluting the mixed bacteria to a concentration at which the number of bacteria was identifiable, the mixed bacteria were poured into a TSA medium, and culture was performed at 36°C for 24 hours, and then the number of bacteria was confirmed. The reduction rates of the number of bacteria are shown in Table 6.

**[Table 6]**

| Classification | Number of repeated inoculations | | | | |
|---|---|---|---|---|---|
| | One time | Two times | Three times | Four times | Five times |
| Amorphous alloy coated specimen | >99.9% | >99.9% | >99.9% | >99.9% | >99.9% |
| Uncoated specimen | 98.6% | 98.3% | 97.6% | 95.7% | 75.0% |

As shown in Table 6, it may be confirmed that the antimicrobial activity of the amorphous alloy coated specimen is maintained even when repeatedly inoculated 5 times, while the antimicrobial activity of the uncoated specimen is lost under the same conditions.

### [Evaluation of Antimicrobial Properties under Severe Conditions]

The same specimens as the specimens used in the evaluation of the antimicrobial durability according to repeated inoculation were prepared.

The surfaces of the prepared uncoated specimens and amorphous alloy coated specimens were washed with 70% ethanol and then dried in a clean bench for about 15 hours. Mixed bacteria obtained by mixing *Escherichia coli, Staphylococcus aureus,* and *Klebsiella pneumonia* were inoculated 1 time in an amount of 10⁷ cfu/ml to the dried specimens using a 1/500 NB medium. After the inoculation, the mixed bacteria were covered with a UV sterilized cover glass (18 mm * 18 mm) and cultured in a constant temperature and humidity chamber maintained at 36°C and 90% RH. At 1 hour, 2 hours, 3 hours, 9 hours, and 18 hours after the inoculation, each specimen was vortexed in 10 ml of a letheen medium to recover bacteria. After diluting the mixed bacteria to a concentration at which the number of bacteria was identifiable, the mixed bacteria were poured into a TSA medium, and culture was performed at 36°C for 24 hours, and then the number of bacteria was confirmed. The reduction rates of the number of bacteria are shown in Table 7.

**[Table 7]**

| Classification | Elapsed time | | | | | |
|---|---|---|---|---|---|---|
| | 1hr | 2hr | 3hr | 6hr | 9hr | 18hr |
| Amorphous alloy coated specimen | TNTC | TNTC | TNTC | TNTC | >99.9% | >99.9% |
| Uncoated specimen | TNTC | TNTC | TNTC | TNTC | TNTC | TNTC |
| * TNTC (Too Numerous to Count) : Unable to measure number due to excessive number of bacteria | | | | | | |

As shown in Table 7, the antimicrobial activity of the amorphous alloy coated specimen is confirmed after 9 hours, while the antimicrobial activity of the uncoated specimen is not confirmed even after 18 hours.

## Claims

1. An alloy consisting of:
a first component composed of Fe and Ni;
a second component composed of one or more selected from the group consisting of Cr, Co, Mo, and Cu; and
a third component composed of one or more selected from the group consisting of Si, B, and P,
wherein, with respect to 100 parts by weight of the first component,
the second component is contained in an amount of 90 to 110 parts by weight, and
the third component is contained in an amount of 5 to 15 parts by weight, and
a weight ratio of Fe to 100 parts by weight of the first component is 1.59 to 1.65 times the weight ratio of Ni to 100 parts by weight of the first component.

2. The alloy of claim 1, wherein the second component contains Cr, and further contains one or more selected from Co, Mo, and Cu.

3. The alloy of claim 2, wherein a weight ratio of Cr to 100 parts by weight of the first component is 0.63 times to 1.39 times the weight ratio of Fe to 100 parts by weight of the first component.

4. The alloy of claim 1, wherein the second component is composed of Cr, Co, Mo, and Cu, and
the third component is composed of Si and B.

5. An alloy powder obtained by melting the alloy of any one of claims 1 to 4, atomizing the alloy by spraying a fluid onto the melted alloy, and then cooling the atomized alloy with a refrigerant.

6. The alloy powder of claim 5, wherein the alloy powder includes an amorphous phase and has defects formed on a surface thereof.

7. The alloy powder of claim 5, wherein the alloy powder has a reduction rate of *Escherichia coli* after 24 hours of 99.9% or more when measured by a test method of KSM 0146.

8. The alloy powder of claim 6, wherein the alloy powder has a reduction rate of *Escherichia coli* after 1 hour of 80% or more when measured by a test method of KSM 0146.

9. An alloy coated body comprising:
a base material; and
an alloy coating layer provided on the base material,
wherein the alloy coating layer contains: an alloy of any one of claims 1 to 4.

10. The alloy coated body of claim 9, wherein a thickness of the alloy coating layer is 10 µm to 500 µm.

11. The alloy coated body of claim 9, wherein a porosity of the alloy coating layer is 5.0% or less.

12. The alloy coated body of claim 9, wherein the alloy coating layer has a reduction rate of *Escherichia coli* after 24 hours of 99.9% or more when measured by a test method of JIS Z 2801.

## Patentansprüche

1. Eine Legierung, bestehend aus:
einer ersten Komponente, zusammengesetzt aus Fe und Ni;
einer zweiten Komponente, zusammengesetzt aus einem oder mehreren, ausgewählt aus der Gruppe bestehend aus Cr, Co, Mo und Cu; und
einer dritten Komponente, zusammengesetzt aus einem oder mehreren, ausgewählt aus der Gruppe bestehend aus Si, B und P,
wobei, bezogen auf 100 Gewichtsteile der ersten Komponente,
die zweite Komponente in einer Menge von 90 bis 110 Gewichtsteilen enthalten ist und die dritte Komponente in einer Menge von 5 bis 15 Gewichtsteilen enthalten ist und
ein Gewichtsverhältnis von Fe zu 100 Gewichtsteilen der ersten Komponente das 1,59-bis 1,65-Fache des Gewichtsverhältnisses von Ni zu 100 Gewichtsteilen der ersten Komponente beträgt.

2. Die Legierung nach Anspruch 1, wobei die zweite Komponente Cr enthält und ferner eines oder mehrere, ausgewählt aus Co, Mo und Cu, enthält.

3. Die Legierung nach Anspruch 2, wobei ein Gewichtsverhältnis von Cr zu 100 Gewichtsteilen der ersten Komponente das 0,63- bis 1,39-Fache des Gewichtsverhältnisses von Fe zu 100 Gewichtsteilen der ersten Komponente beträgt.

4. Die Legierung nach Anspruch 1, wobei die zweite Komponente aus Cr, Co, Mo und Cu zusammengesetzt ist und
die dritte Komponente aus Si und B zusammengesetzt ist.

5. Ein Legierungspulver, erhalten durch Schmelzen der Legierung nach einem der Ansprüche 1 bis 4, Zerstäuben der Legierung durch Sprühen eines Fluids auf die geschmolzene Legierung und anschließendes Abkühlen der zerstäubten Legierung mit einem Kältemittel.

6. Das Legierungspulver nach Anspruch 5, wobei das Legierungspulver eine amorphe Phase beinhaltet und an einer Oberfläche desselben gebildete Defekte aufweist.

7. Das Legierungspulver nach Anspruch 5, wobei das Legierungspulver eine Reduktionsrate von *Escherichia coli* nach 24 Stunden von 99,9% oder mehr aufweist, wenn durch ein Prüfverfahren KSM 0146 gemessen.

8. Das Legierungspulver nach Anspruch 6, wobei das Legierungspulver eine Reduktionsrate von *Escherichia coli* nach 1 Stunde von 80% oder mehr aufweist, wenn durch ein Prüfverfahren KSM 0146 gemessen .

9. Ein mit einer Legierung beschichteter Körper, umfassend:
ein Grundmaterial; und
eine auf dem Grundmaterial bereitgestellte Legierungsbeschichtungsschicht,
wobei die Legierungsbeschichtungsschicht enthält: eine Legierung nach einem der Ansprüche 1 bis 4.

10. Der mit einer Legierung beschichtete Körper nach Anspruch 9, wobei eine Dicke der Legierungsbeschichtungsschicht 10 µm bis 500 µm beträgt.

11. Der mit einer Legierung beschichtete Körper nach Anspruch 9, wobei eine Porosität der Legierungsbeschichtungsschicht 5,0% oder weniger beträgt.

12. Der mit einer Legierung beschichtete Körper nach Anspruch 9, wobei die Legierungsbeschichtungsschicht eine Reduktionsrate von *Escherichia coli* nach 24 Stunden von 99,9% oder mehr aufweist, wenn durch ein Prüfverfahren gemäß JIS Z 2801 gemessen.

## Revendications

1. Alliage consistant en :
un premier composant composé de Fe et Ni ;
un deuxième composant composé d'un ou plusieurs choisis dans le groupe constitué par Cr, Co, Mo et Cu ; et
un troisième composant composé d'un ou plusieurs choisis dans le groupe constitué par Si, B et P,
dans lequel, pour 100 parties en poids du premier composant,
le deuxième composant est contenu en une quantité de 90 à 110 parties en poids, et
le troisième composant est contenu en une quantité de 5 à 15 parties en poids, et
le rapport en poids du Fe à 100 parties en poids du premier composant est de 1,59 à 1,65 fois le rapport en poids du Ni à 100 parties en poids du premier composant.

2. Alliage selon la revendication 1, dans lequel le deuxième composant contient du Cr, et contient en outre un ou plusieurs choisis parmi Co, Mo et Cu.

3. Alliage selon la revendication 2, dans lequel le rapport en poids du Cr à 100 parties en poids du premier composant est de 0,63 fois à 1,39 fois le rapport en poids du Fe à 100 parties en poids du premier composant.

4. Alliage selon la revendication 1, dans lequel le deuxième composant est composé de Cr, Co, Mo et Cu, et
le troisième composant est composé de Si et B.

5. Poudre d'alliage obtenue par fonte de l'alliage de l'une quelconque des revendications 1 à 4, atomisation de l'alliage par pulvérisation d'un fluide sur l'alliage fondu, et ensuite refroidissement de l'alliage atomisé avec un réfrigérant.

6. Poudre d'alliage selon la revendication 5, laquelle poudre d'alliage inclut une phase amorphe et a des défauts formés sur une surface de celle-ci.

7. Poudre d'alliage selon la revendication 5, laquelle poudre d'alliage a un taux de réduction d'*Escherichia coli* après 24 heures de 99,9 % ou plus quand il est mesuré au moyen d'une méthode de test de la norme KSM 0146.

8. Poudre d'alliage selon la revendication 6, laquelle poudre d'alliage a un taux de réduction d'*Escherichia coli* après 1 heure de 80 % ou plus quand il est mesuré au moyen d'une méthode de test de la norme KSM 0146.

9. Corps revêtu d'alliage comprenant :
un matériau de base ; et
une couche de revêtement en alliage disposée sur le matériau de base,
dans lequel la couche de revêtement en alliage contient un alliage de l'une quelconque des revendications 1 à 4.

10. Corps revêtu d'alliage selon la revendication 9, dans lequel l'épaisseur de la couche de revêtement en alliage est de 10 µm à 500 µm.

11. Corps revêtu d'alliage selon la revendication 9, dans lequel la porosité de la couche de revêtement en alliage est de 5,0 % ou moins.

12. Corps revêtu d'alliage selon la revendication 9, dans lequel la couche de revêtement en alliage a un taux de réduction d'*Escherichia coli* après 24 heures de 99,9 % ou plus quand il est mesuré au moyen d'une méthode de test de la norme JIS Z 2801.
